# EUROPEAN PATENT SPECIFICATION

(11) **EP 3 220 608 B1**
(45) Date of publication and mention of the grant of the patent: **11.09.2019**
(21) Application number: 16160592.8
(22) Date of filing: 16.03.2016
(51) Int. Cl.: H04L 29/08

(54) **RETRIEVAL OF INDUSTRIAL DEVICE DATA IN A COMMUNICATIONS SYSTEM**
ABFRAGE VON DATEN EINER INDUSTRIELLEN VORRICHTUNG IN EINEM KOMMUNIKATIONSSYSTEM
EXTRACTION DE DONNÉES DE DISPOSITIF INDUSTRIEL DANS UN SYSTÈME DE COMMUNICATIONS

(43) Date of publication of application: 20.09.2017
(73) Proprietor: ABB Schweiz AG, 5400 Baden (CH)
(72) Inventor: Särkimäki, Ville, 00380 Helsinki (FI); Tanila, Teemu, 00380 Helsinki (FI); Suomela, Kalle, 00380 Helsinki (FI); Alkkiomäki, Olli, 00380 Helsinki (FI)
(74) Representative: Kolster Oy Ab

(56) References cited:
- EP-A1- 2 837 979
- US-A1- 2003 220 809
- US-B1- 7 194 446

## Description

### TECHNICAL FIELD

The invention relates to communications, and particularly to retrieving industrial automation device data in a terminal device of a communications system.

### BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

Frequency converters are used to change the frequency and magnitude of electricity supplied to a load. Frequency converters are being used for example in alternating current (AC) motor drives. In exemplary operation, a frequency converter receives AC current from an electrical power supply and converts the frequency of the received AC current to another frequency, after which the AC current is supplied to an AC electric motor. Also further parameters, for example, a voltage level of the received AC current may be changed. The AC motors are used in various applications including, for example, fans and pumps. In many applications, the use of frequency converters may provide significant energy savings compared to supplying electrical power having a constant frequency.

To facilitate service and maintenance of a frequency converter, a network apparatus may be configured to maintain an electronic user manual regarding the maintenance of the frequency converter. However, going through the user manual to decide which frequency converter maintenance actions are needed is inefficient and may take a long time for the service personnel on-site.

EP 2 837 979 A1 discloses a manual for a frequency converter, and a method for configuring a frequency converter.

US 7 194 446 B1 discloses a method where a processing component queries an industrial automation environment receiving a current state of parameters relating to a human machine interface.

### BRIEF DESCRIPTION

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

Some embodiments provide a method, system, apparatus and a computer program product for communicating frequency converter data.

### Brief description of the drawings

In the following the invention will be described in greater detail by means of preferred embodiments with reference to the attached drawings, in which
Figure 1 illustrates a wireless communication system to which embodiments of the invention may be applied;
Figures 2 and 3 are signalling diagrams of a procedure for signalling of identification information on an industrial automation device according to embodiments of the invention;
Figure 4 is a flow chart illustrating an exemplary process;
Figure 5 is a block diagram illustrating an exemplary apparatus.

### Detailed description of the invention

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

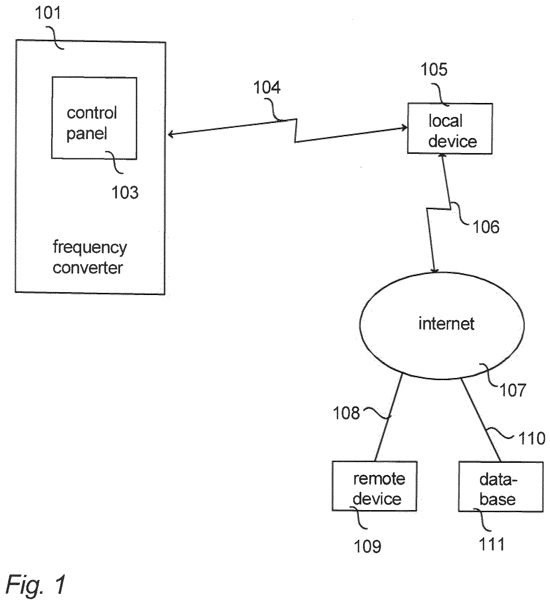

Figure 1 illustrates a wireless communication scenario to which embodiments of the invention may be applied. Referring to Figure 1, an example of a radio system to which embodiments of the invention may be applied, is based on LTE network elements. However, an embodiment is not limited to the LTE radio communications systems but may also be implemented in other radio communications system), EDGE, WCDMA, Bluetooth network, WiFi, WLAN or any other mobile or wireless network. In an embodiment, the presented solution may be applied between user equipment belonging to different but compatible systems such as LTE and UMTS.

A general architecture of a communication system is illustrated in Figure 1. Figure 1 illustrates a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements, and protocols used in or for wireless communication are irrelevant to the actual invention. Therefore, they need not be discussed in more detail here.

Figure 1 illustrates a communication system according to an embodiment. Figure 1 illustrates an exemplary communications system in which a user terminal 105 is able to connect to the internet 107 and to one or more industrial devices such as a frequency converter 101. The user terminal 105 may be a local terminal device (local device) located on-site at a close proximity of the frequency converter 101. The local terminal device 105 may comprise a user equipment such as a smartphone, mobile phone, tablet computer or laptop computer. A connection 106 of the local terminal device 105 to the internet 107 may be provided by a cellular, wireless or wired link. A connection 104 of the local terminal device 105 to the frequency converter 101 may be provided e.g. by a Bluetooth, Bluetooth low energy, WiFi, wireless mesh network, NFC (near field communication), and/or inductive connection (such as an inductive connection according to an inductive power standard (Qi) by the Wireless Power Consortium).

A network apparatus 109 may be a remote device such as a remote terminal device, server and/or database located at a service center, for facilitating service and maintenance of the frequency converter 101. The remote device 109 may facilitate different ways of how to communicate with the frequency converter 101 via the local terminal device 105. The remote device 109 may comprise e.g. a desktop computer, laptop computer, tablet computer, smartphone, mobile phone, server, database, etc. Any suitable technology that makes it possible to store frequency converter instructional documentation and other frequency converter specific data into a service center database 111 may be utilized. For example, a cloud service (cloud computing) may be used via the internet 107 to store frequency converter instructional documentation and other frequency converter data into the service center database 111. The local and remote devices may be capable of communicating with each other via the internet 107 by utilizing the cloud service.

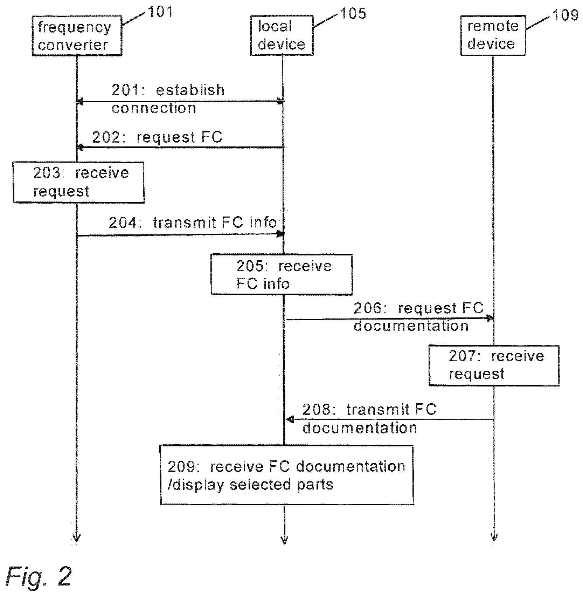

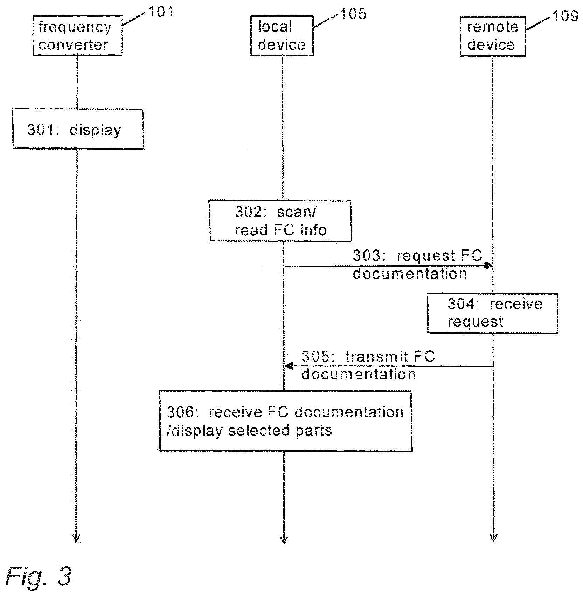

Let us now describe embodiments of the invention with reference to Figures 2 and 3. Figures 2 and 3 are signalling diagrams illustrating methods for signalling identification information on an industrial automation device between the industrial automation device (such as the frequency converter 101), and network nodes (or network apparatuses) of a communication system, such as the local device 105 and/or the remote device 109. The network node may be a terminal device, user equipment, host computer, server computer, base station, access node or any other network element. For example, the server computer or the host computer may generate a virtual network through which the host computer communicates with the terminal device.

Referring to Figure 2, the frequency converter 101 may store, e.g. in an internal memory of the frequency converter 101, identification information (such as information on a serial number, type, firmware version, one or more user-modified parameters, and/or latest active/acknowledged fault codes) regarding the frequency converter. The local terminal device and the frequency converter are capable of establishing (block 201) a wireless communications link 104 with each other. After the communications link 104 has been established, the local terminal device 105 may transmit (block 202) to the frequency converter an FC info request, the FC info request requesting the frequency converter 101 to transmit to the local terminal device 105 the identification information regarding the frequency converter. In block 203, the frequency converter 101 receives the FC info request from the local device 105 via the communications link 104. In response to the receiving 203, the frequency converter 101 is configured to transmit (block 204) the requested identification information to the local terminal device 105 via the communications link 104. The local terminal device 105 receives (block 205) the identification information regarding the frequency converter, and based on the receiving 205, transmits (block 206) a FC documentation request including the identification information regarding the frequency converter, to the remote device 109 via a communications network 107.

The FC documentation request including the identification information is received (block 207) in the remote device 109 from the local terminal device 105. Based on the received identification information, the remote device retrieves (block 207) frequency converter instructional documentation from a database. Based on the retrieving, the remote device transmits (block 208) to the local terminal device at least a part of the instructional documentation via the communications network. The local terminal device receives (block 209) the at least a part of the instructional documentation from the remote device, and detects (block 209) relevant parts of the received documentation. Based on the detecting, the local terminal device displays (block 209) the relevant parts of the received documentation on a display of the local terminal device 105 to the user of the local terminal device 105.

Herein, the communications link established between the local terminal device 105 and the frequency converter 101 may comprise e.g. a Bluetooth connection, inductive connection, wired connection, and/or near field communication (NFC) connection.

Referring to Figure 3, the frequency converter 101 may store, e.g. in an internal memory of the frequency converter 101, identification information (such as information on a serial number, type, firmware version, and/or one or more user-modified parameters, and/or latest active/acknowledged fault codes) regarding the frequency converter. The local terminal device 105 is configured to read (block 302) the frequency converter identification information by scanning a respective QR code from the frequency converter, and based on the reading 302, the local terminal device 105 transmits (block 303) a FC documentation request including the identification information regarding the frequency converter, to the remote device 109 via a communications network 107. The frequency converter may be configured to display (block 301) the QR code on its display e.g. in response to an act by the user (for example, the user pressing an appropriate button), so that the local terminal device is able to scan the QR code.

The FC documentation request including the identification information is received (block 304) in the remote device 109 from the local terminal device 105. Based on the identification information, the remote device retrieves (block 304) frequency converter instructional documentation from a database. Based on the retrieving, the remote device transmits (block 305) to the local terminal device at least a part of the instructional documentation via the communications network. The local terminal device receives (block 306) the at least a part of the instructional documentation from the remote device, and detects (block 306) relevant parts of the received documentation. Based on the detecting, the local terminal device displays (block 306) the relevant parts of the received documentation on a display of the local terminal device 105 to the user of the local terminal device 105.

Herein, the local terminal device 105 may be configured to read the identification information stored in the frequency converter, such that the local terminal device comprises a QR (quick response) code scanner configured to scan a QR code displayed by the frequency converter. Thus, by scanning the QR code, the identification information (such as the information on the serial number, type, firmware version, one or more user-modified parameters, and/or latest active/acknowledged fault codes) regarding the frequency converter, may be obtained in the local terminal device.

In an embodiment, the local terminal device may store the automated power conversion device instructional documentation in its internal memory, wherein the local terminal device retrieves, based on the identification information, the instructional documentation from the internal memory (instead of the remote database) of the local terminal device. Then, relevant parts of the documentation may be determined (based on the identification information) and displayed by the local terminal device.

An embodiment provides a system comprising a drive unit 101 which is equipped with a short range radio interface, e.g. Bluetooth or WiFi. The radio interface may be in the drive unit 101 or in a control panel 103 of the drive unit 101. The mobile device 105 may operate as a mobile router that routes data between the short range wireless radio network 104 and the internet-connected IP based network 107, for example, 3G, 4G, LTE, LTE-A, 5G, WiFi. The remote user device 109 is connected to the internet 107 by using Ethernet, WiFi or other network interface.

In an embodiment, the remote connection may be mutually agreed between the local device user and the remote device user, for example, by a phone call, chat messages or similar. Then, a connection is initiated by the remote user by sending a connection request from the remote device. The local device user receives the connection request and approves the connection. After the remote connection is established, the remote user is able to communicate with the drive and access the internal configuration settings by means of read and write requests, for example, by using an application programming interface (API). These requests are routed through the network on top of the wired or wireless network used, e.g. Bluetooth, WiFi, 3G, 4G and/or Ethernet. The industrial device may store FC info files in its internal memory about user-modified parameters and/or latest active/acknowledged fault codes, for example. The local user may read these files by sending a FC info request from the local device to the industrial device. Upon receiving the FC info request, the industrial device transmits the FC info files via the local device to the remote device. These FC info files may be used in the local and/or remote device for retrieving relevant instructional documentation regarding the industrial device.

In an embodiment, a mobile device, such as a portable phone, is brought in a close proximity of an automated power conversion device such as a frequency converter. A software application in the mobile device is able to identify the serial number (e.g. "1135102081"), type (e.g. "XYZ10") and/or the firmware version (e.g. "1.90") of the frequency converter. Based on the frequency converter identification information, the mobile device retrieves/fetches from a network data storage (e.g. a server) frequency converter related documentation (e.g. the user manual). The mobile device recognizes frequency converter parameters modified by the user (the parameter number and value of those parameters that differ from the default parameter value), and shows, on its display, information contained in the user manual regarding those modified parameters.

In an embodiment, the mobile device may start the application in the mobile device in response to an act by the user. The mobile device may read the frequency converter identification information from the frequency converter by using data transfer means of the mobile device (cable, optical, acoustic or radio transfer). The identification information may include at least a serial number and/or type of the frequency converter and information on the firmware version used in the frequency converter. The identification information may also include other information, such as information on user-modified frequency converter parameters. Based on the identification information, the mobile device may retrieve, from a remote device such as a network server, frequency converter related documentation (such as the frequency converter user manual, or parts of the user manual). Based on the retrieving, the mobile device is configured to automatically display: 1) a description from the user manual of only those parameters that have been modified by the user, and/or 2) information from the user manual on latest active/acknowledged fault codes (latest fault codes and information whether they are active faults or not). The mobile device displays automatically the names of the user-modified parameters and the user manual description related to them. Non-related information is not shown. In other words, only the parts from the user manual that are relevant to the current setting of the frequency converter are shown and other information may be hidden. The user may use the user interface to jump from one parameter to other, but only those parameters are shown which were listed in the identification information read from the frequency converter. If there is an active fault in the frequency converter, the user manual description of the fault is shown.

In an embodiment, based on installed base information stored in the server and based on the frequency converter identification information the local terminal device may be configured to obtain and automatically display to the user, information on option modules coupled to the frequency converter and the instructional documentation related to the modules.

In an embodiment, the mobile device may be configured to display a frequency converter parameter value obtained from the frequency converter, together with the respective parameter description obtained from the instructional documentation.

In an embodiment, an equation for counting the value of a frequency converter parameter (for example, PID controller, motor heat shield) may be obtained and displayed in the mobile device. The mobile device may be configured to display a user interface, such that the user is able to insert figures into the displayed equation. Based on the inserted figures the mobile device may count the parameter value and display the counted parameter value to the user.

In addition to a drive system/frequency converter, the embodiment are also applicable to other automated power conversion devices such as AC/DC modules, DC/AC modules, DC/DC modules, programmable logic controllers (PLC), switches, motion controllers, motion drives, servo motors, soft starters, robotics, cars, heavy equipment, and/or any other industrial automation device used for industrial automation.

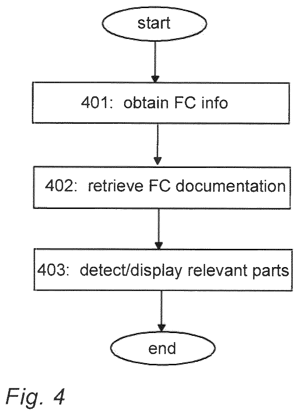

Figure 4 illustrates an exemplary process for communicating automated power conversion device data. Referring to Figure 4, a terminal device 105 obtains (block 401) identification information (such as information on a serial number, type, firmware version, one or more user-modified parameters, and/or latest active/acknowledged fault codes) regarding the automated power conversion device. Based on the obtaining 401, the terminal device 105 retrieves (block 402) automated power conversion device instructional documentation from a database. The local terminal device 105 detects (block 403) relevant parts of the instructional documentation (i.e. relevant in view of the latest active/acknowledged fault codes, for example). Based on the detecting, the local terminal device 105 may display (block 403) the relevant parts of the received documentation on a display of the local terminal device 105 to the user of the local terminal device 105.

An embodiment provides an apparatus comprising at least one processor and at least one memory including a computer program code, wherein the at least one memory and the computer program code are configured, with the at least one processor, to cause the apparatus to carry out the procedures of the above-described terminal device. The at least one processor, the at least one memory, and the computer program code may thus be considered as an embodiment of means for executing the above-described procedures of the terminal device. The apparatus may be comprised in the terminal device, e.g. the apparatus may form a chipset or a circuitry in the terminal device. In some embodiments, the apparatus is the terminal device. The apparatus comprises a processing circuitry 10 comprising the at least one processor. The processing circuitry 10 may comprise a communications controller 16 configured to obtain identification information related to an automated power convertion device. The processing circuitry 10 may further comprise an documentation retriever 18 configured to retrieve instructional documentation on the automated power convertion device. The documentation retriever 18 may be configured to retrieve the documentation, and detect relevant parts of the documentation to be displayed on a display.

The processing circuitry 10 may comprise the circuitries as sub-circuitries, or they may be considered as computer program modules executed by the same physical processing circuitry. The memory 20 may store one or more computer program products (i.e. software) 24 comprising program instructions that specify the operation of the circuitries. The memory 20 may further store a database 26 comprising automated power convertion device instructional documentation, for example. The apparatus may further comprise an interface (e.g. transmitter Tx/receiver Rx) 22 providing the apparatus with communication capability with network nodes.

As used herein, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used herein, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

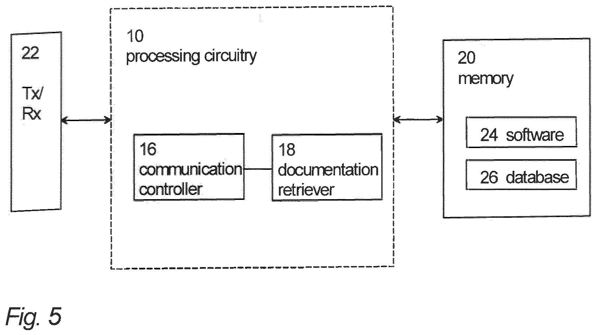

The processes or methods described above in connection with Figures 1 to 5 may also be carried out in the form of one or more computer process defined by one or more computer programs. The computer program shall be considered to encompass also a module of a computer programs, e.g. the above-described processes may be carried out as a program module of a larger algorithm or a computer process. The computer program(s) may be in source code form, object code form, or in some intermediate form, and it may be stored in a carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to cellular or mobile communication systems defined above but also to other suitable communication systems. The protocols used, the specifications of cellular communication systems, their network elements, and terminal devices develop rapidly. Such development may require extra changes to the described embodiments. Therefore, all words and expressions should be interpreted broadly and they are intended to illustrate, not to restrict, the embodiment.

It will be obvious to a person skilled in the art that, as the technology advances, the inventive concept can be implemented in various ways. The invention and its embodiments are not limited to the examples described above but may vary within the scope of the claims.

## Claims

1. A method of communicating frequency converter data in a communications system, the method comprising
receiving, in a local terminal device, frequency converter identification information, and frequency converter parameter information on frequency converter parameters modified by the user;
forwarding the frequency converter identification information and the parameter information from the local terminal device to a remote device via a communications network;
receiving the frequency converter identification information and the parameter information in the remote device from the local terminal device;
based on the identification information and the parameter information, retrieving, in the remote device, frequency converter instructional documentation from a database;
based on the retrieving, transmitting, from the remote device to the local terminal device, at least a part of the instructional documentation via the communications network;
receiving the at least a part of the instructional documentation in the local terminal device from the remote device; and
based on the current configuration setting of the frequency converter, detecting and displaying, in the local terminal device, relevant parts of the received documentation, wherein the method comprises, in the local terminal device, recognizing frequency converter parameter values that differ from default frequency converter parameter values, and displaying information contained in the received documentation regarding frequency converter parameters whose values differ from the default parameter values.

2. A method of communicating frequency converter data in a communications system, the method comprising
receiving, in a local terminal device, frequency converter identification information, and frequency converter parameter information on frequency converter parameters modified by the user;
based on the identification information and the parameter information, retrieving, in the local terminal device, frequency converter instructional documentation from a database;
based on the current configuration setting of the frequency converter, detecting and displaying, in the local terminal device, relevant parts of the instructional documentation, wherein the method comprises, in the local terminal device, recognizing frequency converter parameter values that differ from default frequency converter parameter values, and displaying information contained in the instructional documentation regarding frequency converter parameters whose values differ from the default parameter values.

3. A method according to claim 1 or 2, wherein the frequency converter identification information and the parameter information is transmitted from the frequency converter to the local terminal device, via a communication link established between the local terminal device and the frequency converter.

4. A method according to claim 1 or 2, wherein the frequency converter identification information and the parameter information is received in the local terminal device in response to the local terminal device scanning a corresponding QR code displayed on the frequency converter.

5. A method according to claim 1, 2 or 3, wherein the frequency converter identification information and the parameter information is transmitted from the frequency converter to the local terminal device
- periodically,
- in response to establishing a communication link between the local terminal device and the frequency converter, or
- in response to a request from the local terminal device.

6. A method according to any of claims 1 to 5, wherein the frequency converter identification information comprises information on
a serial number of the frequency converter,
a type of the frequency converter,
a firmware version of the frequency converter, and/or
latest active or acknowledged fault codes.

7. A method according to claim 1 to 6, wherein the frequency converter instructional documentation comprises a user manual.

8. A communications system comprising
a local terminal device and a remote device;
wherein the local terminal device is configured to
receive frequency converter identification information, and frequency converter parameter information on frequency converter parameters modified by the user; and
forward the frequency converter identification information and the parameter information to a remote device via a communications network;
wherein the remote device is configured to
receive the frequency converter identification information and the parameter information from the local terminal device;
based on the identification information and the parameter information, retrieve frequency converter instructional documentation from a database; and
based on the retrieving, transmit, to the local terminal device, at least a part of the instructional documentation via the communications network;
the local terminal device being configured to
receive the at least a part of the instructional documentation from the remote device;
based on the current configuration setting of the frequency converter, detect and display relevant parts of the received documentation, wherein the local terminal device is configured to recognize frequency converter parameter values that differ from default frequency converter parameter values, and display information contained in the instructional documentation regarding frequency converter parameters whose values differ from the default parameter values.

9. A communications system comprising a local terminal device configured to
receive frequency converter identification information, and frequency converter parameter information on frequency converter parameters modified by the user;
based on the identification information and the parameter information, retrieve frequency converter instructional documentation from a database;
based on the current configuration setting of the frequency converter, detect and display relevant parts of the instructional documentation, wherein the local terminal device is configured to recognize frequency converter parameter values that differ from default frequency converter parameter values, and display information contained in the instructional documentation regarding frequency converter parameters whose values differ from the default parameter values.

10. A system according to claim 8 or 9, wherein the system is configured to perform any of the method steps of claims 3 to 7.

11. A local terminal device comprising
at least one processor; and
at least one memory including a computer program code, wherein the at least one memory and the computer program code are configured, with the at least one processor, to cause the device to
receive frequency converter identification information, and frequency converter parameter information on frequency converter parameters modified by the user; and
forward the frequency converter identification information and the parameter information to a remote device via a communications network;
receive frequency converter instructional documentation from the remote device via the communications network;
based on the current configuration setting of the frequency converter, detect and display relevant parts of the received documentation, wherein the at least one memory and the computer program code are configured, with the at least one processor, to cause the device to recognize frequency converter parameter values that differ from default frequency converter parameter values, and display information contained in the instructional documentation regarding frequency converter parameters whose values differ from the default parameter values.

12. A device according to claim 11, wherein the at least one memory and the computer program code are configured, with the at least one processor, to cause the device to receive the frequency converter identification information and the parameter information from the frequency converter via a communication link established with the frequency converter.

13. A device according to claim 11, wherein the at least one memory and the computer program code are configured, with the at least one processor, to cause the device to receive the frequency converter identification information and the parameter information by scanning a corresponding QR code displayed on the frequency converter.

14. A computer program product embodied on a distribution medium readable by a computer and comprising program instructions which, when loaded into an apparatus, execute the method according to any preceding claim 1 to 7.

## Patentansprüche

1. Verfahren zum Kommunizieren von Frequenzwandlerdaten in einem Kommunikationssystem, wobei das Verfahren umfasst:
Empfangen von Frequenzwandler-Identifikationsinformationen und Frequenzwandler-Parameterinformationen über durch den Benutzer geänderte Frequenzwandlerparameter in einer lokalen Endgerätvorrichtung;
Weiterleiten der Frequenzwandler-Identifikationsinformationen und der Parameterinformationen von der lokalen Endgerätvorrichtung zu einer entfernten Vorrichtung über ein Kommunikationsnetz;
Empfangen der Frequenzwandler-Identifikationsinformationen und der Parameterinformationen in der entfernten Vorrichtung von der lokalen Endgerätvorrichtung;
basierend auf den Identifikationsinformationen und den Parameterinformationen, Abrufen von Frequenzwandler-Anleitungsdokumentation von einer Datenbank, in der entfernten Vorrichtung;
basierend auf dem Abrufen, Senden von mindestens einem Teil der Anleitungsdokumentation von der entfernten Vorrichtung über das Kommunikationsnetz an die lokale Endgerätvorrichtung;
Empfangen des mindestens einen Teils der Anleitungsdokumentation in der lokalen Endgerätvorrichtung von der entfernten Vorrichtung; und
basierend auf der gegenwärtigen Konfigurationseinstellung des Frequenzwandlers, Feststellen und Anzeigen relevanter Teile der empfangenen Dokumentation in der lokalen Endgerätvorrichtung, wobei das Verfahren in der lokalen Endgerätvorrichtung das Erkennen von Frequenzwandler-Parameterwerten, die sich von Standard-Frequenzwandler-Parameterwerten unterscheiden, und das Anzeigen von in der empfangenen Dokumentation enthaltenen Informationen umfasst, die Frequenzwandlerparameter betreffen, deren Werte sich von den Standardparameterwerten unterscheiden.

2. Verfahren zum Kommunizieren von Frequenzwandlerdaten in einem Kommunikationssystem, wobei das Verfahren umfasst:
Empfangen von Frequenzwandler-Identifikationsinformationen und Frequenzwandler-Parameterinformationen über durch den Benutzer geänderte Frequenzwandlerparameter in einer lokalen Endgerätvorrichtung;
basierend auf den Identifikationsinformationen und den Parameterinformationen, Abrufen von Frequenzwandler-Anleitungsdokumentation von einer Datenbank, in der lokalen Endgerätvorrichtung;
basierend auf der gegenwärtigen Konfigurationseinstellung des Frequenzwandlers, Feststellen und Anzeigen relevanter Teile der Anleitungsdokumentation in der lokalen Endgerätvorrichtung, wobei das Verfahren in der lokalen Endgerätvorrichtung das Erkennen von Frequenzwandler-Parameterwerten, die sich von Standard-Frequenzwandler-Parameterwerten unterscheiden, und das Anzeigen von in der Anleitungsdokumentation enthaltenen Informationen umfasst, die Frequenzwandlerparameter betreffen, deren Werte sich von den Standardparameterwerten unterscheiden.

3. Verfahren nach Anspruch 1 oder 2, wobei die Frequenzwandler-Identifikationsinformationen und die Parameterinformationen von dem Frequenzwandler zu der lokalen Endgerätvorrichtung über eine Kommunikationsverbindung gesendet werden, die zwischen der lokalen Endgerätvorrichtung und dem Frequenzwandler hergestellt wird.

4. Verfahren nach Anspruch 1 oder 2, wobei die Frequenzwandler-Identifikationsinformationen und die Parameterinformationen in der lokalen Endgerätvorrichtung als Reaktion auf das Scannen eines entsprechenden QR-Codes, der auf dem Frequenzwandler angezeigt wird, in der lokalen Endgerätvorrichtung empfangen werden.

5. Verfahren nach Anspruch 1, 2 oder 3, wobei die Frequenzwandler-Identifikationsinformationen und die Parameterinformationen von dem Frequenzwandler zu der lokalen Endgerätvorrichtung gesendet werden:
- periodisch,
- als Reaktion auf das Herstellen einer Kommunikationsverbindung zwischen der lokalen Endgerätvorrichtung und dem Frequenzwandler, oder
- als Reaktion auf eine Anforderung von der lokalen Endgerätvorrichtung.

6. Verfahren nach einem der Ansprüche 1 bis 5, wobei die Frequenzwandler-Identifikationsinformationen Informationen umfassen über:
eine Seriennummer des Frequenzwandlers,
einen Typ des Frequenzwandlers,
eine Firmware-Version des Frequenzwandlers und/oder
letzte aktive oder bestätigte Fehlercodes.

7. Verfahren nach Anspruch 1 bis 6, wobei die Frequenzwandler-Anleitungsdokumentation eine Betriebsanleitung umfasst.

8. Kommunikationssystem, das umfasst:
eine lokale Endgerätvorrichtung und eine entfernte Vorrichtung;
wobei die lokale Endgerätvorrichtung ausgestaltet ist zum:
Empfangen von Frequenzwandler-Identifikationsinformationen und Frequenzwandler-Parameterinformationen über durch den Benutzer geänderte Frequenzwandlerparameter; und
Weiterleiten der Frequenzwandler-Identifikationsinformationen und der Parameterinformationen über ein Kommunikationsnetz an eine entfernte Vorrichtung;
wobei die entfernte Vorrichtung ausgestaltet ist zum:
Empfangen der Frequenzwandler-Identifikationsinformationen und der Parameterinformationen von der lokalen Endgerätvorrichtung;
basierend auf den Identifikationsinformationen und den Parameterinformationen, Abrufen von Frequenzwandler-Anleitungsdokumentation von einer Datenbank; und
basierend auf dem Abrufen, Senden von mindestens einem Teil der Anleitungsdokumentation über das Kommunikationsnetz an die lokale Endgerätvorrichtung;
wobei die lokale Endgerätvorrichtung ausgestaltet ist zum:
Empfangen des mindestens einen Teils der Anleitungsdokumentation von der entfernten Vorrichtung;
basierend auf der gegenwärtigen Konfigurationseinstellung des Frequenzwandlers, Feststellen und Anzeigen relevanter Teile der empfangenen Dokumentation, wobei die lokale Endgerätvorrichtung ausgestaltet ist, Frequenzwandler-Parameterwerte zu erkennen, die sich von Standard-Frequenzwandler-Parameterwerten unterscheiden, und in der Anleitungsdokumentation enthaltene Informationen anzuzeigen, die Frequenzwandlerparameter betreffen, deren Werte sich von den Standardparameterwerten unterscheiden.

9. Kommunikationssystem, das eine lokale Endgerätvorrichtung umfasst, die ausgestaltet ist zum:
Empfangen von Frequenzwandler-Identifikationsinformationen und Frequenzwandler-Parameterinformationen über durch den Benutzer geänderte Frequenzwandlerparameter;
basierend auf den Identifikationsinformationen und den Parameterinformationen, Abrufen der Frequenzwandler-Anleitungsdokumentation von einer Datenbank;
basierend auf der gegenwärtigen Konfigurationseinstellung des Frequenzwandlers, Feststellen und Anzeigen relevanter Teile der Anleitungsdokumentation, wobei die lokale Endgerätvorrichtung ausgestaltet ist, Frequenzwandler-Parameterwerte zu erkennen, die sich von Standard-Frequenzwandler-Parameterwerten unterscheiden, und in der Anleitungsdokumentation enthaltene Informationen anzuzeigen, die Frequenzwandlerparameter betreffen, deren Werte sich von den Standardparameterwerten unterscheiden.

10. System nach Anspruch 8 oder 9, wobei das System ausgestaltet ist, einen von den Verfahrensschritten nach Anspruch 3 bis 7 durchzuführen.

11. Lokales Endgerät, das umfasst:
mindestens einen Prozessor; und
mindestens einen Speicher, der einen Computerprogrammcode umfasst, wobei der mindestens eine Speicher und der Computerprogrammcode ausgestaltet sind, mit dem mindestens einen Prozessor zu bewirken, dass die Vorrichtung:
Frequenzwandler-Identifikationsinformationen und Frequenzwandler-Parameterinformationen über durch den Benutzer geänderte Frequenzwandlerparameter empfängt; und
die Frequenzwandler-Identifikationsinformationen und die Parameterinformationen über ein Kommunikationsnetz an eine entfernte Vorrichtung weiterleitet;
Frequenzwandler-Anleitungsdokumentation von der entfernten Vorrichtung über das Kommunikationsnetz empfängt;
basierend auf der gegenwärtigen Konfigurationseinstellung des Frequenzwandlers relevante Teile der empfangenen Dokumentation feststellt und anzeigt, wobei der mindestens eine Speicher und der Computerprogrammcode mit dem mindestens einen Prozessor ausgestaltet sind, um zu bewirken, dass die Vorrichtung Frequenzwandler-Parameterwerte, die sich von Standard-Frequenzwandler-Parameterwerten unterscheiden, erkennt und in der Anweisungsdokumentation enthaltene Informationen anzeigt, die Frequenzwandlerparameter betreffen, deren Werte sich von den Standardparameterwerten unterscheiden.

12. Vorrichtung nach Anspruch 11, wobei der mindestens eine Speicher und der Computerprogrammcode mit dem mindestens einen Prozessor ausgestaltet sind, um zu bewirken, dass die Vorrichtung die Frequenzwandler-Identifikationsinformationen und die Parameterinformationen von dem Frequenzwandler über eine Kommunikationsverbindung empfängt, die mit dem Frequenzwandler hergestellt ist.

13. Vorrichtung nach Anspruch 11, wobei der mindestens eine Speicher und der Computerprogrammcode mit dem mindestens einen Prozessor ausgestaltet sind, um zu bewirken, dass die Vorrichtung die Frequenzwandler-Identifikationsinformationen und die Parameterinformationen durch Scannen eines entsprechenden QR-Codes empfängt, der auf dem Frequenzwandler angezeigt ist.

14. Computerprogrammprodukt, das in einem Verteilungsmittel ausgeführt ist, das durch einen Computer lesbar ist und Computerprogrammbefehle umfasst, die, wenn sie in eine Vorrichtung geladen werden, das Verfahren nach einem der vorhergehenden Ansprüche 1 bis 7 ausführen.

## Revendications

1. Procédé de communication de données de convertisseur de fréquence dans un système de communications, le procédé comprenant
la réception, dans un dispositif terminal local, d'informations d'identification de convertisseur de fréquence, et d'informations de paramètre de convertisseur de fréquence sur des paramètres de convertisseur de fréquence modifiés par l'utilisateur ;
le transfert des informations d'identification de convertisseur de fréquence et des informations de paramètre du dispositif terminal local à un dispositif distant via un réseau de communications ;
la réception des informations d'identification de convertisseur de fréquence et des informations de paramètre dans le dispositif distant en provenance du dispositif terminal local ;
sur la base des informations d'identification et des informations de paramètre, la récupération, dans le dispositif distant, d'une documentation instructionnelle de convertisseur de fréquence à partir d'une base de données ;
sur la base de la récupération, la transmission, du dispositif distant au dispositif terminal local, d'au moins une partie de la documentation instructionnelle via le réseau de communications ;
la réception de l'au moins une partie de la documentation instructionnelle dans le dispositif terminal local en provenance du dispositif distant ; et
sur la base du réglage de configuration actuel du convertisseur de fréquence, la détection et l'affichage, dans le dispositif terminal local, de parties pertinentes de la documentation reçue, où le procédé comprend, dans le dispositif terminal local, la reconnaissance de valeurs de paramètre de convertisseur de fréquence qui diffèrent de valeurs de paramètre de convertisseur de fréquence par défaut, et l'affichage d'informations contenues dans la documentation reçue concernant des paramètres de convertisseur de fréquence dont les valeurs diffèrent des valeurs de paramètre par défaut.

2. Procédé de communication de données de convertisseur de fréquence dans un système de communications, le procédé comprenant
la réception, dans un dispositif terminal local, d'informations d'identification de convertisseur de fréquence, et d'informations de paramètre de convertisseur de fréquence sur des paramètres de convertisseur de fréquence modifiés par l'utilisateur ;
sur la base des informations d'identification et des informations de paramètre, la récupération, dans le dispositif terminal local, d'une documentation instructionnelle de convertisseur de fréquence à partir d'une base de données ;
sur la base du réglage de configuration actuel du convertisseur de fréquence, la détection et l'affichage, dans le dispositif terminal local, de parties pertinentes de la documentation instructionnelle, où le procédé comprend, dans le dispositif terminal local, la reconnaissance de valeurs de paramètre de convertisseur de fréquence qui diffèrent de valeurs de paramètre de convertisseur de fréquence par défaut, et l'affichage d'informations contenues dans la documentation instructionnelle concernant des paramètres de convertisseur de fréquence dont les valeurs diffèrent des valeurs de paramètre par défaut.

3. Procédé selon la revendication 1 ou 2, dans lequel les informations d'identification de convertisseur de fréquence et les informations de paramètre sont transmises du convertisseur de fréquence au dispositif terminal local, via une liaison de communication établie entre le dispositif terminal local et le convertisseur de fréquence.

4. Procédé selon la revendication 1 ou 2, dans lequel les informations d'identification de convertisseur de fréquence et les informations de paramètre sont reçues dans le dispositif terminal local en réponse au dispositif terminal local scannant un code QR correspondant affiché sur le convertisseur de fréquence.

5. Procédé selon la revendication 1, 2 ou 3, dans lequel les informations d'identification de convertisseur de fréquence et les informations de paramètre sont transmises du convertisseur de fréquence au dispositif terminal local
- périodiquement,
- en réponse à l'établissement d'une liaison de communication entre le dispositif terminal local et le convertisseur de fréquence, ou
- en réponse à une demande du dispositif terminal local.

6. Procédé selon l'une quelconque des revendications 1 à 5, dans lequel les informations d'identification de convertisseur de fréquence comprennent des informations sur
un numéro de série du convertisseur de fréquence,
un type du convertisseur de fréquence,
une version de micrologiciel du convertisseur de fréquence, et/ou
les derniers codes de défaut actifs ou acquittés.

7. Procédé selon les revendications 1 à 6, dans lequel la documentation instructionnelle de convertisseur de fréquence comprend un manuel de l'utilisateur.

8. Système de communications comprenant
un dispositif terminal local et un dispositif distant ;
dans lequel le dispositif terminal local est configuré pour
recevoir des informations d'identification de convertisseur de fréquence, et des informations de paramètre de convertisseur de fréquence sur des paramètres de convertisseur de fréquence modifiés par l'utilisateur ; et
transférer les informations d'identification de convertisseur de fréquence et les informations de paramètre à un dispositif distant via un réseau de communications ;
dans lequel le dispositif distant est configuré pour recevoir les informations d'identification de convertisseur de fréquence et les informations de paramètre en provenance du dispositif terminal local ;
sur la base des informations d'identification et des informations de paramètre, récupérer une documentation instructionnelle de convertisseur de fréquence à partir d'une base de données ; et
sur la base de la récupération, transmettre, au dispositif terminal local, au moins une partie de la documentation instructionnelle via le réseau de communications ;
le dispositif terminal local étant configuré pour
recevoir l'au moins une partie de la documentation instructionnelle en provenance du dispositif distant ;
sur la base du réglage de configuration actuel du convertisseur de fréquence, détecter et afficher des parties pertinentes de la documentation reçue, où le dispositif terminal local est configuré pour reconnaître des valeurs de paramètre de convertisseur de fréquence qui diffèrent de valeurs de paramètre de convertisseur de fréquence par défaut, et afficher des informations contenues dans la documentation instructionnelle concernant des paramètres de convertisseur de fréquence dont les valeurs diffèrent des valeurs de paramètre par défaut.

9. Système de communications comprenant un dispositif terminal local configuré pour
recevoir des informations d'identification de convertisseur de fréquence, et des informations de paramètre de convertisseur de fréquence sur des paramètres de convertisseur de fréquence modifiés par l'utilisateur ;
sur la base des informations d'identification et des informations de paramètre, récupérer une documentation instructionnelle de convertisseur de fréquence à partir d'une base de données ;
sur la base du réglage de configuration actuel du convertisseur de fréquence, détecter et afficher des parties pertinentes de la documentation instructionnelle, où le dispositif terminal local est configuré pour reconnaître des valeurs de paramètre de convertisseur de fréquence qui diffèrent de valeurs de paramètre de convertisseur de fréquence par défaut, et afficher des informations contenues dans la documentation instructionnelle concernant des paramètres de convertisseur de fréquence dont les valeurs diffèrent des valeurs de paramètre par défaut.

10. Système selon la revendication 8 ou 9, dans lequel le système est configuré pour effectuer l'une quelconque des étapes de procédé des revendications 3 à 7.

11. Dispositif terminal local comprenant
au moins un processeur ; et
au moins une mémoire incluant un code de programme informatique, où l'au moins une mémoire et le code de programme informatique sont configurés, avec l'au moins un processeur, pour amener le dispositif à
recevoir des informations d'identification de convertisseur de fréquence, et des informations de paramètre de convertisseur de fréquence sur des paramètres de convertisseur de fréquence modifiés par l'utilisateur ; et
transférer les informations d'identification de convertisseur de fréquence et les informations de paramètre à un dispositif distant via un réseau de communications ;
recevoir une documentation instructionnelle de convertisseur de fréquence en provenance du dispositif distant via le réseau de communications ;
sur la base du réglage de configuration actuel du convertisseur de fréquence, détecter et afficher des parties pertinentes de la documentation reçue, où l'au moins une mémoire et le code de programme informatique sont configurés, avec l'au moins un processeur, pour amener le dispositif à reconnaître des valeurs de paramètre de convertisseur de fréquence qui diffèrent de valeurs de paramètre de convertisseur de fréquence par défaut, et afficher des informations contenues dans la documentation instructionnelle concernant des paramètres de convertisseur de fréquence dont les valeurs diffèrent des valeurs de paramètre par défaut.

12. Dispositif selon la revendication 11, dans lequel l'au moins une mémoire et le code de programme informatique sont configurés, avec l'au moins un processeur, pour amener le dispositif à recevoir les informations d'identification de convertisseur de fréquence et les informations de paramètre en provenance du convertisseur de fréquence via une liaison de communication établie avec le convertisseur de fréquence.

13. Dispositif selon la revendication 11, dans lequel l'au moins une mémoire et le code de programme informatique sont configurés, avec l'au moins un processeur, pour amener le dispositif à recevoir les informations d'identification de convertisseur de fréquence et les informations de paramètre en scannant un code QR correspondant affiché sur le convertisseur de fréquence.

14. Produit de programme informatique incorporé sur un support de distribution lisible par un ordinateur et comprenant des instructions de programme qui, lorsqu'elles sont chargées dans un appareil, exécutent le procédé selon l'une quelconque des revendications 1 à 7 précédentes.
